# EUROPÄISCHE PATENTSCHRIFT

(11) **EP 3 649 724 B1**
(45) Veröffentlichungstag und Bekanntmachung des Hinweises auf die Patenterteilung: **27.04.2022**
(21) Anmeldenummer: 18739496.0
(22) Anmeldetag: 04.07.2018
(51) Int. Cl.: H02K 1/30, H02K 1/32, H02K 7/00, H02K 15/02, H02K 1/28

(54) **VERFAHREN ZUR HERSTELLUNG EINES ROTORS FÜR EINEN ELEKTROMOTOR UND MIT DIESEM VERFAHREN HERGESTELLTER ROTOR**
METHOD FOR PRODUCING A ROTOR FOR AN ELECTRIC MOTOR AND ROTOR PRODUCED BY SAID METHOD
PROCÉDÉ DE RÉALISATION D'UN ROTOR DESTINÉ À UN MOTEUR ÉLECTRIQUE ET ROTOR PRODUIT GRÂCE À CE PROCÉDÉ

(30) Priorität: 07.07.2017 DE 102017115229
(43) Veröffentlichungstag der Anmeldung: 13.05.2020
(73) Patentinhaber: thyssenkrupp AG, 45143 Essen (DE); thyssenkrupp Dynamic Components GmbH, 38871 Ilsenburg (Harz) (DE)
(72) Erfinder: PAUL, Daniel, 09235 Burkhardtsdorf (DE)
(74) Vertreter: thyssenkrupp Intellectual Property GmbH
(86) Internationale Anmeldenummer: PCT/EP2018/068147
(87) Internationale Veröffentlichungsnummer: WO 2019/008068

(56) Entgegenhaltungen:
- EP-A1- 2 712 063
- EP-A2- 2 991 196
- WO-A1-2006/064860
- JP-A- 2016 005 307
- US-A1- 2002 153 783

## Beschreibung

Die Erfindung betrifft ein Verfahren zur Herstellung eines Rotors für einen Elektromotor. Ferner betrifft die Erfindung einen Rotor, der mit einem solchen Verfahren hergestellt bzw. herstellbar ist.

Aus dem Stand der Technik sind Herstellungsverfahren für Rotoren von Elektromotoren bekannt, wobei beispielsweise Schrumpfverbände für die kraftschlüssige Verbindung von aktiven Teilen eines Rotors, insbesondere den Blechen bzw. Blechpaketen, mit der Rotorwelle genutzt werden. Alternativ zeigt die DE 10 2014 106 614 A1 ein Verfahren auf, bei welchem ein Blechpaket auf eine Rotorwelle aufgebracht und mittels zweier Druckplatten verspannt wird, wobei die Druckplatten auf die Rotorwelle aufgepresst werden. Dazu wird der Außenumfang der Welle vorzugsweise durch ein Rollieren oder Walzen zunächst aufgeweitet, so dass sich beim Aufbringen der Druckplatten eine entsprechende Pressverbindung einstellt.

Aus dem Stand der Technik ist es auch bekannt, Blechpakete auf einem separaten hülsenförmigen Bauteil zu montieren. Diese Baugruppe aus einem Blechpaket und einer Trägerhülse wird anschließend mittels eines Pressverbandes auf der Welle befestigt. Ein solches Verfahren offenbart beispielsweise DE 10 2015 201 103 A1. Aus der WO 2006/064860 A1 ist ein Rotor für einen Elektromotor mit einer Rotorwelle und einer Rotorbaugruppe bekannt geworden, die eine Trägerhülse und wenigstens ein auf der Trägerhülse montiertes Blechpaket aufweist, wobei die Rotorwelle wenigstens einen rollierten Wellenabschnitt aufweist, auf den die Rotorbaugruppe aufgepresst ist.

Aus der EP 2 712 063 A1 ist ferner eine Presssitzstruktur im Zusammenhang mit dem Rotor eines Elektromotors bekannt geworden.

Aus der US 2002/153783 A1 ist ein Rotor für einen Elektromotor mit einer Rotorwelle und einer Rotorbaugruppe bekant geworden, wobei die Rotorbaugruppe eine Trägerhülse und auf der Trägerhülse montiertes Blechpaket aufweist und wobei die Rotorwelle einen Rändelabschnitt aufweist.

Die bekannten Herstellungsverfahren haben den Nachteil, dass sie eine besonders hohe Maßhaltigkeit der zu fügenden Bauteile erfordern. Insbesondere bei Pressverbänden ist es notwendig, sowohl die Rotorwelle, als auch das Blechpaket mit geringen Toleranzen auszubilden, um einen ausreichend festen Pressverband herstellen zu können.

Die Erfindung hat sich die Aufgabe gestellt, ein vereinfachtes Montageverfahren für eine Rotorwelle zu entwickeln, wobei insbesondere geringe Anforderungen an die Maßhaltigkeit der zu fügenden Bauteile gestellt werden und gleichzeitig ein vereinfachter Fertigungsablauf in der Serienfertigung realisiert werden kann. Ferner ist es Aufgabe der Erfindung, einen Rotor für einen Elektromotor anzugeben, der einfach, insbesondere ohne die Notwendigkeit der Einhaltung von hoher Maßhaltigkeit, hergestellt werden kann.

Erfindungsgemäß ist der Ringspalt durch ein Dichtmittel gegenüber den rollierten Wellenabschnitten abgedichtet und kann somit als Fluidkanal genutzt werden.

Erfindungsgemäß wird diese Aufgabe im Hinblick auf das Herstellungsverfahren durch den Gegenstand des Patentanspruchs 1 und im Hinblick auf den Rotor für einen Elektromotor durch den Gegenstand des Patentanspruchs 8 gelöst.

Bevorzugte Weiterbildungen der Erfindung sind in den jeweiligen Unteransprüchen angegeben.

Das erfindungsgemäße Verfahren hat mehrere Vorteile. Einerseits ermöglicht das erfindungsgemäße Verfahren die Vormontage einer Rotorbaugruppe und damit eine Lagervorhaltung der aktiven Bauteile von Rotoren. Die Rotorbaugruppe ist insbesondere in einem separaten Herstellungsschritt montierbar und kann anschließend für den späteren Fügevorgang zur Verbindung mit der Rotorwelle lagernd vorgehalten werden. So kann im Herstellungsprozess ein Puffer gebildet werden, wodurch sichergestellt ist, dass nachfolgende Prozessschritte auch bei Ausfällen in vorangegangenen Prozessschritten weitergeführt werden können. Überdies bewirkt der Schritt b), in welchem die Rotorwelle abschnittsweise rolliert wird, eine Oberflächenstruktur, die auch bei ansonsten geringer Maßhaltigkeit zu einem festen Pressverband zwischen der Rotorbaugruppe und der Rotorwelle führt. Mithin kann auf diese Weise auf Feinbearbeitungsschritte, die bei sonstigen Pressvorgängen, beispielsweise gemäß DE 10 2015 201 103 A1, erforderlich sind, verzichtet werden. Auch kann die Qualität des Prozesses direkt während des Verpressens z.B. über die Aufnahme der Weg-Kraft-Verlaufskurve kontrolliert werden, so dass für die Absicherung der Überdeckung zwischen den zu fügenden Bauteilen kein separater Prozessschritt für die Überprüfung der Maßhaltigkeit der zu fügenden Bauteile erfolgen muss. Damit vereinfacht sich die Prozessführung, wodurch vor allem bei einer Serienfertigung mit hohen Stückzahlen erhebliche Prozesskosten einzusparen sind. Durch das Rollieren von Abschnitten der Rotorwelle können außerdem Wellenabsätze bzw. Abstufungen in der Rotorwelle vermieden werden, die andernfalls zur Abgrenzung unterschiedlicher Lageroberflächen erforderlich wären. Damit geht unmittelbar eine Materialeinsparung und eine Prozessschritteinsparung einher.

Bei dem erfindungsgemäßen Herstellungsverfahren ist vorgesehen, dass im Schritt c) die Rotorbaugruppe auf den rollierten Wellenabschnitt der Rotorwelle aufgepresst wird. Mit anderen Worten ist vorgesehen, dass das Aufpressen der Rotorbaugruppe so erfolgt, dass die Trägerhülse auf den rollierten Wellenabschnitt der Rotorwelle aufgepresst wird. Die Verbindung zwischen der Rotorwelle und der Rotorbaugruppe ergibt sich auf diese Weise durch einen Pressverband zwischen dem rollierten Wellenabschnitt und der Trägerhülse.

Wenn die Trägerhülse einen einheitlichen Innendurchmesser aufweist, ist der Pressverband besonders einfach herzustellen. Ein Verkanten, das bei Blechpaketen nur durch eine Zwischenbearbeitung, insbesondere dem Schleifen des Innenumfangs des Blechpakets, erreichbar ist, wird dabei vermieden.

Ein nebengeordneter Aspekt der Erfindung betrifft einen Rotor für einen Elektromotor mit einer Rotorbaugruppe, wobei die Rotorbaugruppe eine Trägerhülse und wenigstens ein auf der Trägerhülse montiertes Blechpaket aufweist. Die Rotorwelle weist ferner wenigstens zwei rollierte Wellenabschnitte auf, auf den die Rotorbaugruppe aufgepresst ist.

Der vorstehend beschriebene Rotor ist vorzugsweise durch ein erfindungsgemäßes Herstellungsverfahren produziert. Der erfindungsgemäße Rotor ist einfach und, insbesondere in der Serienproduktion, kostengünstig herstellbar.

Die nachfolgend genannten bevorzugten Weiterbildungen und Vorteile gelten sowohl für das erfindungsgemäße Herstellungsverfahren als auch den erfindungsgemäßen Rotor.

So ist in einer bevorzugten Ausführungsform der Erfindung des Herstellungsverfahrens oder des Rotors vorgesehen, dass das wenigstens eine Blechpaket durch einen axialen Pressverband auf der Trägerhülse fixiert wird bzw. fixiert ist. Damit ist ein enger Kontakt zwischen den einzelnen Blechen des Blechpakets sichergestellt, was für die elektromagnetische und mechanische Funktionalität des Rotors zweckmäßig ist.

Das wenigstens eine Blechpaket kann auf der Trägerhülse axial zwischen einem ersten Anschlag und einem zweiten Anschlag eingespannt werden bzw. sein. Dabei ist vorteilhaft vorgesehen, dass der erste Anschlag integral mit der Trägerhülse ausgebildet wird bzw. ist. Alternativ kann der erste Anschlag fest mit der Trägerhülse verbunden werden bzw. sein. Die feste Verbindung zwischen dem ersten Anschlag und der Trägerhülse kann insbesondere durch Schweißen, Aufpressen oder Verschrauben erfolgen.

Die Verwendung von Anschlägen an der Trägerhülse, die das Blechpaket halten, ermöglicht es, die Montage der einzelnen Bleche auf der Trägerhülse zu vereinfachen, da eine hohe Maßhaltigkeit nicht erforderlich ist. Insbesondere können die einzelnen Bleche relativ locker, insbesondere mit einer Spielpassung, auf der Trägerhülse angeordnet werden. Durch die Anschläge werden die Bleche des Blechpakets anschließend axial fixiert. Insgesamt ergibt sich daraus eine relativ einfache und schnell durchführbare Prozessabfolge.

Der zweite Anschlag kann konkret als Druckplatte ausgebildet sein, die fest mit der Trägerhülse verbunden wird bzw. verbunden ist. Die Verbindung der Druckplatte mit der Trägerhülse kann durch Schweißen, Aufpressen oder Verschrauben erfolgen. Dies unterstützt die einfache Vormontage der Rotorbaugruppe. Konkret kann auf die Trägerhülse das Blechpaket, beispielsweise in Form einzelner Bleche, "aufgefädelt" werden. Dabei ist an der Trägerhülse vorzugsweise ein Anschlag vorgesehen, der das Auffädeln des Blechpakets axial begrenzt. Anschließend wird vorteilhaft die Druckplatte auf die Trägerhülse gefädelt und mit der Trägerhülse so fest verbunden, dass die Druckplatte gleichzeitig axial auf das Blechpaket einwirkt. Konkret kann die Druckplatte mit dem gegenüberliegenden, ersten Anschlag und dem Blechpaket einen einen axialen, reibkraftschlüssigen Pressverband bilden.

Bei einer bevorzugten Variante des erfindungsgemäßen Verfahrens bzw. des erfindungsgemäßen Rotors kann vorgesehen sein, dass die Trägerhülse zur Bildung wenigstens eines rollierten Hülsenabschnitts zumindest abschnittsweise rolliert wird bzw. rolliert ist. Die Druckplatte wird bzw. ist vorzugsweise auf den wenigstens einen rollierten Hülsenabschnitt aufgepresst. Hier wird dasselbe Grundprinzip verwirklicht, das auch für die Verbindung zwischen der Trägerhülse und der Rotorwelle genutzt wird. Durch das Rollieren eines Abschnitts der Trägerhülse, also durch Bildung eines rollierten Hülsenabschnitts, wird eine feste Pressverbindung zwischen der Trägerhülse und der Druckplatte verwirklicht, ohne dass dazu hohe Maßhaltigkeiten erforderlich sind. Durch das Rollieren wird der Außenumfang der Trägerhülse etwas aufgeweitet. Gleichzeitig ermöglicht die rollierte Oberfläche ein Fließen von Material, wenn die Druckplatte aufgepresst wird. Damit kann ein stabiler Pressverband auch bei geringen Maßhaltigkeiten zwischen der Trägerhülse und der Druckplatte erreicht werden.

Um eine verbesserte Fixierung zwischen Trägerhülse und Rotorwelle bzw. zwischen der Druckplatte und der Trägerhülse zu erreichen, kann vorteilhaft vorgesehen sein, dass die Trägerhülse und/oder die Druckplatte mit einer profilierten Innenkontur versehen werden derart, dass ein durch ein axiales Aufpressen der Trägerhülse mit der Rotorwelle und/oder durch ein axiales Aufpressen der Druckplatte auf die Trägerhülse entstehender Pressverband um eine formschlüssige Verbindungskomponente ergänzt wird. Mit anderen Worten wird durch eine profilierte Innenkontur der Trägerhülse erreicht, dass die Verbindung zwischen der Trägerhülse und der Rotorwelle nicht nur reibkraftschlüssig erfolgt, sondern zusätzlich formschlüssig. Ebenso gilt dies für eine Verbindung zwischen einer Druckplatte mit einer profilierten Innenkontur und der Trägerhülse. Durch die profilierte Innenkontur wird beim Aufpressen der Verbindungskomponenten (Trägerhülse - Rotorwelle bzw. Druckplatte - Trägerhülse) Material des unprofilierten Verbindungspartners verdrängt, so dass die profilierte Innenkontur in das Material des unprofilierten Verbindungspartners eingreift und einen Formschluss bildet. Damit wird insbesondere eine verbesserte Übertragung von Rotationskräften und Drehmomenten erreicht. Vorzugsweise ist vorgesehen, dass die Trägerhülse als Umformteil, Tiefziehteil oder Spritzgussteil ausgebildet wird bzw. ist. Insbesondere kann die Trägerhülse aus einem Aluminium, einem Tiefziehstahl oder einem Kunststoff gebildet werden oder sein.

Generell können der rollierte Wellenabschnitt und/oder der rollierte Hülsenabschnitt durch eine Längsrollierung und/oder eine Querrollierung und/oder eine Kreuzrollierung gebildet werden bzw. sein. Für alle rollierten Abschnitte der Rotorwelle bzw. der Rotorbaugruppe gilt, dass diese längs-, quer- oder kreuzrolliert sein können. Kombinationen davon sind selbstverständlich möglich. Weiterhin ist es möglich, durch eine Profilierung, beispielsweise eine geräumte Verzahnung, der Innenkontur des auf einen rollierten Abschnitt zu fügenden Fügepartners (Rotorbaugruppe, Trägerhülse, Druckplatte bzw. -scheibe, ...) den Reibkraftschluss um eine formschlüssige Komponente zu erweitern. Die vorliegende Erfindung ist insoweit mit dem sogenannten Presta^{®}-Verfahren kombinierbar, wie es insbesondere in DE 10 2014 106 614 A1 (Absätze [0013] und [0029] beschrieben ist. In diesem Zusammenhang wird darauf hingewiesen, dass die Rotorwelle sowohl als Vollwelle, als auch als Hohlwelle ausgeführt sein kann. Ferner ist es außerdem möglich, zwischen einzelne Bleche des Blechpakets oder zwischen mehrere Blechpakete Stützringe oder Zwischendruckplatten einzubringen.

Im Allgemeinen können die rollierten Abschnitte bzw. Oberflächen der Rotorwelle oder der Trägerhülse verschiedenartig ausgeführt sein. Beispielsweise können sich die rollierten Abschnittsflächen nur über bestimmte Abschnitte erstrecken oder die gesamte Oberfläche überdecken. Beispielsweise kann die gesamte Außenoberfläche der Rotorwelle und/oder die gesamte Außenoberfläche der Trägerhülse rolliert sein.

In einer erfindungsgemäßen Ausführungsform des Verfahrens bzw. des Rotors weist die Rotorwelle wenigstens einen unrollierten Wellenabschnitt auf, der zwischen zwei rollierten Wellenabschnitten angeordnet wird bzw. angeordnet ist.

Der unrollierte Wellenabschnitt begrenzt mit der Trägerhülse einen Ringspalt. Der Ringspalt kann insbesondere als Fluidkanal genutzt werden, beispielsweise um Schmiermittel oder Kühlflüssigkeit durch den Rotor zu leiten. In diesem Zusammenhang ist erfindungsgemäß vorgesehen, dass der Ringspalt durch ein Dichtmittel gegen den rollierten Wellenabschnitt abgedichtet wird bzw. ist.

Um eine Fluidzirkulation zu ermöglichen, ist weiterhin bevorzugt vorgesehen, dass der Ringspalt mit Fluidkanälen in der Rotorbaugruppe fluidverbunden wird bzw. fluidverbunden ist.

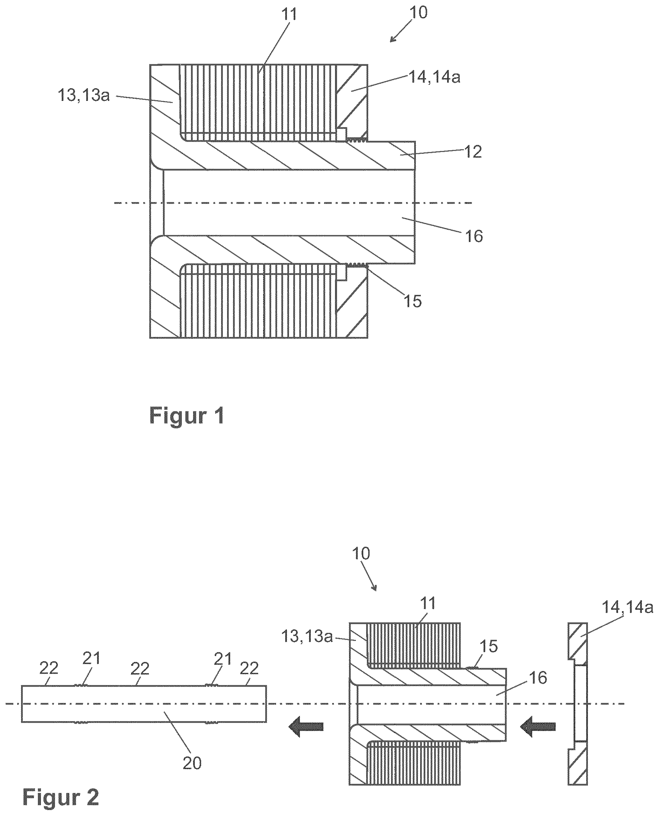

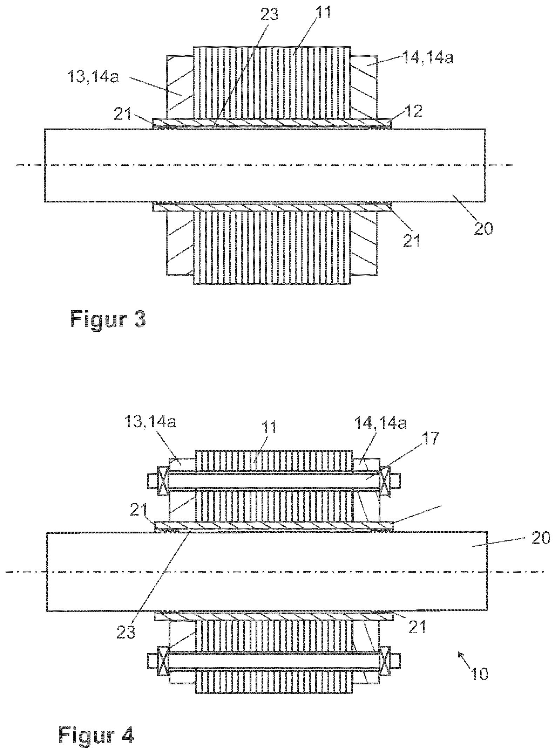

Die Erfindung wird im Folgenden anhand von Ausführungsbeispielen unter Bezug auf die beigefügten, schematischen Zeichnungen näher erläutert. Figuren 3-6, 7a, 7b sowie die im Zusammenhang mit der Figuren 3-6, 7a, 7b unten beschriebenen Absätze stellen die Ausführungsbeispiele und Ausführungsformen der Erfindung dar. Figuren 1 und 2 sowie die im Zusammenhang mit der Figuren 1 und 2 unten beschriebenen Absätze stellen die Ausführungsbeispiele und Ausführungsformen, die nicht Teil der vorliegenden Erfindung sind, dar. Darin zeigen
- Figur 1: eine Querschnittsansicht durch eine Rotorbaugruppe für einen Rotor nach einem Ausführungsbeispiel, das nicht zur vorliegenden Erfindung gehört;
- Figur 2: eine Explosions-Querschnittsansicht durch einen Rotor mit einer Rotorbaugruppe gemäß Figur 1 zur Illustration des Herstellungsverfahrens, das nicht zur Erfindung gehört;
- Figur 3: eine Querschnittsansicht durch ein Ausführungsbeispiel eines erfindungsgemäßen Rotors;
- Figur 4: eine Querschnittsansicht durch einen erfindungsgemäßen Rotor gemäß einem weiteren Ausführungsbeispiel, wobei das Blechpaket durch Zuganker axial verspannt ist,
- Figur 5: eine Querschnittsansicht eines erfindungsgemäßen Rotors nach einer weiteren bevorzugten Ausführungsform;
- Figur 6: eine Querschnittsansicht durch einen Rotor für einen Elektromotor nach einem bevorzugten erfindungsgemäßen Ausführungsbeispiel, wobei eine Druck- oder Stützscheibe integral mit der Trägerhülse ausgebildet ist;
- Figur 7a: eine Trägerhülse gemäß Figur 3; und
- Figur 7b: eine Abwandlung der Trägerhülse aus Fig. 7a.

In der Querschnittsansicht gemäß Figur 1 ist eine Rotorbaugruppe 10 gezeigt, die ein Blechpaket 11 und eine Trägerhülse 12 umfasst. Ferner ist eine Druckplatte 14a vorgesehen, auf welche später näher eingegangen wird.

Das Blechpaket 11 ist aus mehreren eng aneinander anliegenden, insbesondere axial als Pressverband gekoppelten, Blechen gebildet. Das Blechpaket 11 kann generell zusätzliche Aufnahmen für Magnete oder Spulen aufweisen.

Die Trägerhülse 12 ist bei dem Ausführungsbeispiel gemäß Figur 1 als tiefgezogenes hülsenförmiges Trägerbauteil ausgebildet. Konkret ist ein erster Anschlag 13 integral mit der Trägerhülse 12 ausgeformt. Der erste Anschlag 13 bildet einen axialen Flansch 13a, an welchem das Blechpaket 11 längsaxial anliegt.

Der axiale Pressverband des Blechpakets 11 wird durch einen zweiten Anschlag 14 gewährleistet, der bei dem Ausführungsbeispiel gemäß Figur 1 als Druckplatte 14a ausgebildet ist. Die Druckplatte 14a weist einen Innendurchmesser auf, der im Wesentlichen mit dem Außendurchmesser der Trägerhülse 12 eine unmittelbare Presspassung oder eine Spielpassung bildet. Die Trägerhülse 12 weist jedoch einen rollierten Hülsenabschnitt 15 auf, der den Außenumfang der Trägerhülse 12 abschnittsweise derart erweitert, dass in diesem rollierten Hülsenabschnitt 15 zwischen der Druckplatte 14a und der Trägerhülse 12 eine Presspassung vorliegt. Der rollierte Hülsenabschnitt 15 ist vorzugsweise in einem Bereich der Trägerhülse 12 angeordnet, der so von dem ersten Anschlag 13 beabstandet ist, dass beim Aufpressen der Druckplatte 14a auf den rollierten Hülsenabschnitt 15 ein axialer Pressverband für das Blechpaket 11 hergestellt wird. Das Blechpaket 11 kann insoweit mit Spielpassung auf der Trägerhülse 12 angeordnet werden. Die Kraft- und damit auch Drehmomentübertragung erfolgt vom Blechpaket 11 reibkraftschlüssig über den ersten Anschlag 13 bzw. den Flansch 13a und den zweiten Anschlag 14 bzw. die Druckplatte 14a auf die Trägerhülse 12.

In Figur 2 ist anhand einer Querschnitts-Explosionszeichnung das Montageverfahren für einen Rotor nach Ausführungsbeispiel gezeigt. Der Rotor weist zusätzlich zu der Rotorbaugruppe 10, die in Figur 1 dargestellt ist, eine Rotorwelle 20 auf. Wie in Figur 2 gut erkennbar ist, weist die Rotorwelle 20 zwei Abschnitte auf, die eine Rollierung aufweisen. Diese beiden rollierten Wellenabschnitte 21 sind längsaxial beabstandet zueinander auf der Außenoberfläche der Rotorwelle 20 angeordnet. Bei dem Ausführungsbeispiel gemäß Figur 2 ist eine Rotorwelle gezeigt, die als Vollwelle ausgebildet ist. Die Rotorwelle 20 ist also aus einem Vollmaterial gebildet. Alternativ ist es im Allgemeinen möglich, eine Hohlwelle als Rotorwelle 20 einzusetzen. Dies gilt für alle Ausführungsbeispiele.

Das Herstellungsverfahren sieht zunächst vor, dass in einem Vormontageschritt die Rotorbaugruppe 10, umfassend die Trägerhülse 20 und das Blechpaket 11, hergestellt wird. Dazu wird die Trägerhülse 12, die bei dem Ausführungsbeispiel gemäß Figur 1 und 2 einen Flansch 13a als ersten Anschlag 13 aufweist, mit dem Blechpaket 11 bestückt. Insbesondere kann das Blechpaket 11 entweder als Gesamtpaket, in Form von Blechscheiben, oder als einzelne Bleche auf die Trägerhülse 12 aufgeschoben werden. Unter Blechscheiben ist in diesem Zusammenhang ein Teilpaket beziehungsweise ein Stapel mehrerer Einzelbleche zu verstehen. In einem nächsten Verfahrensschritt, der der Vormontage zugeordnet ist, wird die Druckplatte 14a auf die Trägerhülse 12 aufgebracht und mit dem rollierten Hülsenabschnitt 15 der Trägerhülse 12 verpresst. Gleichzeitig erfolgt ein axiales Verpressen des Blechpakets 11, so dass eine reibkraftschlüssige Kraftübertragung zwischen Blechpakte 11, Anschlägen 13, 14 und der Trägerhülse 12 gewährleistet ist.

Die Rotorbaugruppe 10, umfassend das Blechpaket 11, die Trägerhülse 12 und die beiden Anschläge 13, 14, kann so lagernd vorgehalten werden. Dies ermöglicht es, Ausfälle in der Prozesskette der Herstellung eines Elektromotors zu kompensieren. Insbesondere kann so sichergestellt werden, dass die Endmontage des gesamten Rotors unabhängig von Ausfällen in der vorangegangenen Prozesskette ist.

Parallel zur Vormontage der Rotorbaugruppe 10 kann die Rotorwelle 20 für eine Verbindung mit der Rotorbaugruppe 10 vorbereitet werden. Insbesondere werden dazu Abschnitte der Rotorwelle 20 rolliert, so dass sich die beiden rollierten Wellenabschnitte 21 ergeben. Der Abstand zwischen den rollierten Wellenabschnitten 21 ist vorzugsweise so gewählt, dass dieser kleiner als die Länge der Trägerhülse 12 ist. Diese vorbereiten Rotorwellen 20 mit den rollierten Wellenabschnitten 21 können ebenfalls lagernd vorgehalten werden, so dass eine kontinuierliche Montage von Rotoren sichergestellt ist.

Für die Endmontage des Rotors wird nun die Rotorwelle 20 in die Rotorbaugruppe 10 eingeführt. Konkret wird die Rotorwelle 20 in eine Durchgangsöffnung 16 der Trägerhülse 12 der Rotorbaugruppe 10 eingeführt. In den Abschnitten der Rotorwelle 20, die keine Rollierung aufweisen, also in unrollierten Wellenabschnitten 22, besteht vorzugsweise eine Spielpassung oder eine Übergangspassung, so dass die Rotorwelle 20 leicht in die Durchgangsöffnung 16 eingeführt werden kann. Im Bereich der rollierten Wellenabschnitte 21 besteht zwischen der Rotorwelle 20 und der Trägerhülse 12 jedoch eine Presspassung bzw. Übermaßpassung. Durch axiales Einschieben der Rotorwelle 20 in die Durchgangsöffnung 16 erfolgt so eine Verpressung der Rotorwelle 20 mit der Rotorbaugruppe 10. Dabei wird die Rotorwelle 20 so weit in die Durchgangsöffnung 16 eingeführt, dass beide rollierten Wellenabschnitte 21 mit der Trägerhülse 12 eine Verpressung bilden.

Für alle Ausführungsbeispiele gilt, dass bei der Herstellung zunächst eine Vormontage der Rotorbaugruppe 10 erfolgt. Anschließend wird die Rotorwelle 20, die parallel zur Vormontage der Rotorbaugruppe 10 mit rollierten Wellenabschnitten 21 versehen wird, mit der Rotorbaugruppe 10 verpresst.

In Figur 3 ist ein alternatives Ausführungsbeispiel eines Rotors gezeigt. Der Rotor weist eine Rotorbaugruppe 10 auf, die eine Trägerhülse 12, ein Blechpaket 11, einen ersten Anschlag 13 und einen zweiten Anschlag 14 umfasst. Im Unterschied zum Ausführungsbeispiel gemäß Figuren 1 und 2 ist bei dem Ausführungsbeispiel gemäß Figur 3 vorgesehen, dass der Pressverband zwischen den Anschlägen 13, 14 und dem Blechpaket 11 durch zwei Druckplatten 14a gewährleistet wird, die beidseitig des Blechpakets 11 mit der Trägerhülse 12 verbunden sind. Die Verbindung zwischen den Druckplatten 14a und der Trägerhülse 12 ist nicht näher dargestellt. Damit soll verdeutlicht werden, dass unterschiedliche Befestigungsmöglichkeiten bestehen. Insbesondere können alle Arten von gängigen Welle-Nabe-Verbindungen, beispielsweise Verpressen oder Verschweißen, genutzt werden, um die Druckplatten 14a mit der Trägerhülse 12 zu verbinden.

Gut erkennbar ist auch in Figur 3, dass die Rotorbaugruppe 10 insgesamt mit der Rotorwelle 20 durch Verpressen verbunden ist, wobei die Presspassung insbesondere zwischen den rollierten Wellenabschnitten 21 der Rotorwelle 20 und der Trägerhülse 12 erfolgt. Ebenfalls ist in Figur 3 gut erkennbar, dass die rollierten Wellenabschnitte 21 der Rotorwelle 20 vorzugsweise in den Endabschnitten der Trägerhülse 12 angeordnet sind.

Figur 4 zeigt ein ähnliches Ausführungsbeispiel eines Rotors, wobei eine Rotorbaugruppe 10 vorgesehen ist, die eine Trägerhülse 12, zwei Druckplatten 14a und ein zwischen die Druckplatten 14a eingespanntes Blechpaket aufweist. Ergänzend zu dem Ausführungsbeispiel gemäß Figur 3 ist bei dem Ausführungsbeispiel gemäß Figur 4 vorgesehen, dass der Pressverband der Druckplatten 14a und des Blechpakets 11 durch einen Zuganker 17 erfolgt. Der Zuganker 17 kann beispielsweise über eine Gewindestange und zwei Muttern realisiert werden. Es ist alternativ auch möglich, eine Schraube mit einer Mutter einzusetzen. Im Wesentlichen sind alle möglichen mechanischen, Zuganker-ähnlichen Verbindungsarten einsetzbar.

Anhand der Darstellung gemäß Figur 4 soll beispielhaft verdeutlicht werden, dass die Verwendung von rollierten Wellenabschnitten 21 einen weiteren, bevorzugten Effekt hervorruft. Durch die Verwendung zweier rollierter Wellenabschnitte 21, die in längsaxialer Richtung der Rotorwelle 20 zueinander beabstandet sind, bildet sich zwischen den rollierten Wellenabschnitten 21 ein unrollierter Wellenabschnitt 22. Dieser unrollierte Wellenabschnitt 22 weist auch im verpressten Zustand der Rotorwelle 20 mit der Rotorbaugruppe 10 einen radialen Abstand zur Trägerhülse 12 auf. Konkret ist also zwischen den rollierten Wellenabschnitten 21 ein Ringspalt 23 zwischen der Rotorwelle 20 und der Trägerhülse 12 gebildet. Dieser Ringspalt 23 kann in allen Ausführungsformen der Erfindung dazu genutzt werden, einen Fluidkanal zu bilden. Insbesondere kann der Ringspalt 23 mit weiteren Kanälen in der Rotorbaugruppe 10 verbunden sein, so dass durch den Rotor eine Flüssigkeit, beispielsweise eine Kühlflüssigkeit oder eine Schmierflüssigkeit, geleitet werden kann.

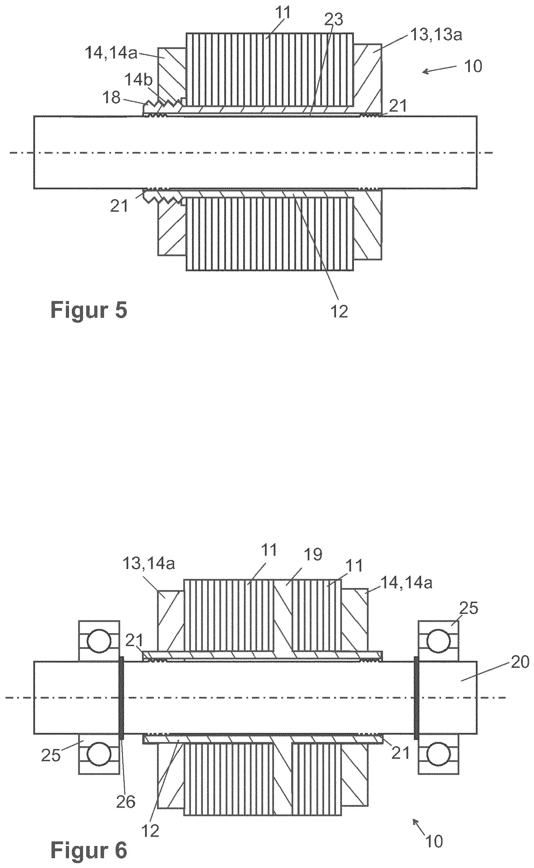

In Figur 5 ist ein Ausführungsbeispiel eines Rotors gezeigt, das Ähnlichkeiten zu dem Ausführungsbeispiel gemäß Figuren 1 und 2 aufweist. Bei dem Rotor gemäß Figur 5 ist die Rotorwelle 20 mit zwei rollierten Wellenabschnitten 21 ausgebildet, die eine Pressverbindung zur Trägerhülse 12 der Rotorbaugruppe 10 herstellen. Die Trägerhülse 12 ist, ähnlich zu dem Ausführungsbeispiel gemäß Figuren 1 und 2, mit einem integral ausgebildeten ersten Anschlag 13 versehen. Konkret weist die Trägerhülse 12 einen Flansch 13a auf, der einstückig mit der Trägerhülse 12 geformt ist. An dem Flansch 13a liegt das Blechpaket 11 an. Die axiale Verpressung des Blechpakets 11 erfolgt über eine Druckplatte 14a, die auf der dem Flansch 13a gegenüberliegenden Seite des Blechpakets 11 an das Blechpaket 11 anschlägt.

Im Unterschied zu dem Ausführungsbeispiel gemäß Figuren 1 und 2 ist die Druckplatte 14a bei dem Ausführungsbeispiel gemäß Figur 5 jedoch nicht auf die Trägerhülse 12 aufgepresst, sondern auf die Trägerhülse 12 aufgeschraubt. Dazu weist die Trägerhülse 12 ein Außengewinde 18 auf, das mit einem entsprechenden Innengewinde 14b der Druckplatte 14a zusammenwirkt. Die Druckplatte 14a kann nach dem Aufschrauben auf die Trägerhülse 12 zusätzlich mit der Trägerhülse 12 schweißverbunden werden. Alternativ ist auch denkbar, die Druckplatte 14a gewindefrei auszubilden und die Verspannung durch eine separate Mutter zu lösen, die auf das Außengewinde 18 der Trägerhülse 12 aufgeschraubt wird. Die separate Mutter spannt dann die Druckplatte 14 gegen das Blechpaket 11.

Figur 6 zeigt ein Ausführungsbeispiel eines Rotors, das in vieler Hinsicht Ähnlichkeit zum Ausführungsbeispiel gemäß Figur 3 zeigt. Ein Unterschied besteht darin, dass die Rotorbaugruppe 10 zwei Blechpakete 11 aufweist, die durch eine Stützscheibe 19 voneinander getrennt sind. Konkret ist vorgesehen, dass die Trägerhülse 12 eine integral mit der Trägerhülse 12 ausgebildete Stützscheibe 19 aufweist. Die Stützscheibe 19 bildet im Wesentlichen einen mittleren Flansch, der sich radial scheibenförmig nach außen erstreckt. Die Blechpakete 11 sind jeweils zwischen die Stützscheibe 19 und eine randseitige Druckplatte 14a eingespannt. Mit anderen Worten spannen die randseitigen Druckplatten 14a die Blechpakete 11 jeweils gegen die Stützscheibe 19. Wie in Figur 6 gut erkennbar ist, ist die Stützscheibe 19 nicht zwingend mittig anzuordnen. Es ist möglich, die Stützscheibe 19 außermittig in Längsrichtung der Trägerhülse 12 anzuordnen. Die Blechpakete 11 weisen dabei unterschiedliche Paketdicken auf. Im Übrigen können die Druckplatten 14a analog den Ausführungen zu Figur 3 auf unterschiedliche Art und Weise mit der Trägerhülse 12 verbunden werden, beispielsweise durch Verpressen, Verschweißen oder Verschrauben. Die Rotorwelle 20 ist in der erfindungsgemäß üblichen Weise mit der Trägerhülse 12 verpresst, wobei die Rotorwelle 20 dazu rollierte Wellenabschnitte 21 aufweist.

Ergänzend ist in Figur 6 dargestellt, dass die Rotorwelle 20 in zwei Wälzlagern gelagert sein kann. Die Wälzlager sind üblicherweise in einem Gehäuse eines Elektromotors fixiert, wobei das Gehäuse ebenfalls einen Stator des Elektromotors beherbergen kann. Die Wälzlager 25 sind in Figur 6 beispielhaft durch Sprengringe 26 axial abgestützt. Eine andere Art der axialen Lagerabstützung ist ebenfalls möglich.

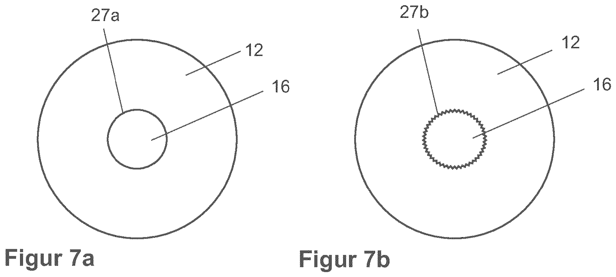

In den Figuren 7a und 7b ist jeweils eine Frontansicht auf eine Trägerhülse 12 gezeigt. Die Trägerhülse 12 weist jeweils eine Durchgangsöffnung 16 zur Aufnahme einer Rotorwelle 20 auf. Die beiden dargestellten Ausführungsbeispiele eine Trägerhülse 12 unterscheiden sich durch die Innenkontur der Durchgangsöffnung 16.

Bei dem Ausführungsbeispiel gemäß Fig. 7a weist die Trägerhülse 12 eine glatte Innenkontur 27a auf. Die Verbindung, insbesondere der axiale Pressverband, zwischen der Trägerhülse 12 und dem unrollierten Wellenabschnitt 22 der Rotorwelle 20 erfolgt in diesem Fall ausschließlich reibkraftschlüssig.

Bei dem Ausführungsbeispiel gemäß Fig. 7b ist die Trägerhülse 12 hingegen mit einer profilierten Innenkontur 27b versehen. Mit anderen Worten weist die Durchgangsöffnung 16 eine Profilierung auf. Durch den axialen Pressverband zwischen der Rotorwelle 20 und der Trägerhülse 12 entsteht somit nicht nur eine reibkraftschlüssige Verbindung, sondern zusätzlich eine formschlüssige Fixierung. Die profilierte Innenkontur der Trägerhülse 12 prägt sich insoweit in die Rotorwelle 20, insbesondere den unrollierten Wellenabschnitt 22 ein, wodurch ein formschlüssiger Kontakt entsteht. Der axiale Pressverband wird folglich durch eine Innenkonturierung bzw. Innenprofilierung der Trägerhülse um eine formschlüssige Verbindungskomponente erweitert.

Analog hierzu kann auch die Druckplatte 14a mit einer profilierten Innenkontur 27b bzw. Innenprofilierung ausgebildet sein, um so den Pressverbund zwischen der Druckplatte 14a und der Trägerhülse 12 um eine formschlüssige Verbindungskomponente zu erweitern. Die Innenprofilierung der Druckplatte 14a kann zusätzlich oder alternativ zu der Ausbildung des rollierten Hülsenabschnitts 15 der Trägerhülse 12 erfolgen.

In einer vorteilhaften Ausgestaltung der Erfindung kann vorgesehen sein, dass die Trägerhülse 12 zur Bildung wenigstens eines rollierten Hülsenabschnitts 15 abschnittsweise rolliert wird und die Druckplatte 14a auf den wenigstens einen rollierten Hülsenabschnitt 15 aufgepresst wird.

In einer weiteren vorteilhaften Ausgestaltung der Erfindung kann vorgesehen sein, dass die Trägerhülse 12 als Umformteil, Tiefziehteil oder Spritzgussteil ausgebildet wird.

In einer weiteren vorteilhaften Ausgestaltung der Erfindung kann vorgesehen sein, dass die Trägerhülse aus einem Aluminium, einem Tiefziehstahl oder einem Kunststoff gebildet wird.

In einer weiteren vorteilhaften Ausgestaltung der Erfindung kann vorgesehen sein, dass der rollierte Wellenabschnitt 21 und/oder der rollierte Hülsenabschnitt 15 durch eine Längsrollierung und/oder eine Querrollierung und/oder eine Kreuzrollierung gebildet wird.

In einer weiteren vorteilhaften Ausgestaltung der Erfindung kann vorgesehen sein, dass die Trägerhülse 12 zur Bildung wenigstens eines rollierten Hülsenabschnitts 15 abschnittsweise rolliert ist und die Druckplatte 14a auf den wenigstens einen rollierten Hülsenabschnitt 15 aufgepresst ist.

In einer weiteren vorteilhaften Ausgestaltung der Erfindung kann vorgesehen sein, dass die Trägerhülse 12 als Umformteil, Tiefziehteil oder Spritzgussteil ausgebildet ist.

In einer weiteren vorteilhaften Ausgestaltung der Erfindung kann vorgesehen sein, dass die Trägerhülse 12 und/oder die Druckplatte 14a mit einer profilierten Innenkontur 27a versehen werden derart, dass ein durch ein axiales Aufpressen der Trägerhülse 12 mit der Rotorwelle 20 und/oder durch ein axiales Aufpressen der Druckplatte 14a auf die Trägerhülse 12 entstehender Pressverband um eine formschlüssige Verbindungskomponente ergänzt wird.

In einer weiteren vorteilhaften Ausgestaltung der Erfindung kann vorgesehen sein, dass die Trägerhülse aus einem Aluminium, einem Tiefziehstahl oder einem Kunststoff gebildet ist.

In einer weiteren vorteilhaften Ausgestaltung der Erfindung kann vorgesehen sein, dass der rollierte Wellenabschnitt 21 und/oder der rollierte Hülsenabschnitt 15 durch eine Längsrollierung und/oder eine Querrollierung und/oder eine Kreuzrollierung gebildet ist.

### Bezugszeichenliste

- 10: Rotorbaugruppe
- 11: Blechpaket
- 12: Trägerhülse
- 13: Erster Anschlag
- 13a: Flansch
- 14: Zweiter Anschlag
- 14a: Druckplatte
- 14b: Innengewinde
- 15: Rollierter Hülsenabschnitt
- 16: Durchgangsöffnung
- 17: Zuganker
- 18: Außengewinde
- 19: Stützscheibe
- 20: Rotorwelle
- 21: Rollierter Wellenabschnitt
- 22: Unrollierter Wellenabschnitt
- 23: Ringspalt
- 24: Schraubgewinde
- 25: Wälzlager
- 26: Sprengring
- 27a: Innenkontur glatt
- 27b: Innenkontur profiliert

## Patentansprüche

1. Verfahren zur Herstellung eines Rotors für einen Elektromotor umfassend:
a) Vormontieren einer Rotorbaugruppe (10) umfassend wenigstens eine Trägerhülse (12) und ein auf der Trägerhülse (12) montiertes Blechpaket (11);
b) zumindest abschnittsweises Rollieren einer Rotorwelle (20) zur Bildung wenigstens zweier rollierter Wellenabschnitte (21) (21) der Rotorwelle (20); und
c) Aufpressen der Rotorbaugruppe (10) auf den wenigstens einen rollierten Wellenabschnitt (21) der Rotorwelle (20) und
d) die Rotorwelle (20) wenigstens einen unrollierten Wellenabschnitt (22) aufweist, der axial zwischen zwei rollierten Wellenabschnitten (21) angeordnet wird und mit der Trägerhülse (12) einen Ringspalt (23) begrenzt, wobei
e) der Ringspalt (23) durch ein Dichtmittel gegenüber den rollierten Wellenabschnitten (21) abgedichtet wird.

2. Verfahren nach Anspruch 1,
**dadurch gekennzeichnet, dass**
im Schritt c) die Trägerhülse (12) auf den rollierten Wellenabschnitt (21) der Rotorwelle (20) aufgepresst wird.

3. Verfahren nach Anspruch 1 oder 2,
**dadurch gekennzeichnet, dass**
das wenigstens eine Blechpaket (11) durch einen axialen Pressverband auf der Trägerhülse (12) fixiert wird.

4. Verfahren nach einem der vorhergehenden Ansprüche,
**dadurch gekennzeichnet, dass**
das wenigstens eine Blechpaket (11) auf der Trägerhülse (12) axial zwischen einem ersten Anschlag (13) und einem zweiten Anschlag (14) eingespannt wird, wobei der erste Anschlag (13) integral mit der Trägerhülse (12) ausgebildet oder fest mit der Trägerhülse (12) verbunden wird, insbesondere durch Schweißen, Aufpressen oder Verschrauben.

5. Verfahren nach Anspruch 4,
**dadurch gekennzeichnet, dass**
der zweite Anschlag (14) als Druckplatte (14a) ausgebildet ist, die fest mit der Trägerhülse (12) verbunden wird, insbesondere durch Schweißen, Aufpressen oder Verschrauben.

6. Verfahren nach einem der vorhergehenden Ansprüche,
**dadurch gekennzeichnet, dass**
die Trägerhülse (12) und/oder die Druckplatte (14a) mit einer profilierten Innenkontur (27a) versehen werden derart, dass ein durch ein axiales Aufpressen der Trägerhülse (12) mit der Rotorwelle (20) und/oder durch ein axiales Aufpressen der Druckplatte (14a) auf die Trägerhülse (12) entstehender Pressverband um eine formschlüssige Verbindungskomponente ergänzt wird.

7. Verfahren nach Anspruch 1,
**dadurch gekennzeichnet, dass**
der Ringspalt (23) mit Fluidkanälen in der Rotorbaugruppe (10) fluidverbunden wird.

8. Rotor für einen Elektromotor mit einer Rotorwelle (20) und einer Rotorbaugruppe (10), die eine Trägerhülse (12) und wenigstens ein auf der Trägerhülse (12) montiertes Blechpaket (11) aufweist, wobei die Rotorwelle (20) wenigstens zwei rollierte Wellenabschnitte (21) aufweist, auf den die Rotorbaugruppe (10) aufgepresst ist, wobei die Rotorwelle (20) wenigstens einen unrollierten Wellenabschnitt (22) aufweist, der axial zwischen zwei rollierten Wellenabschnitten (21) angeordnet ist und mit der Trägerhülse (12) einen Ringspalt (23) begrenzt, wobei der Ringspalt (23) durch ein Dichtmittel gegenüber den rollierten Wellenabschnitten (21) abgedichtet ist.

9. Rotor nach Anspruch 8,
**dadurch gekennzeichnet, dass**
das wenigstens eine Blechpaket (11) durch einen axialen Pressverband auf der Trägerhülse (12) fixiert ist.

10. Rotor nach Anspruch 8 oder 9,
**dadurch gekennzeichnet, dass**
das wenigstens eine Blechpaket (11) auf der Trägerhülse (12) axial zwischen einem ersten Anschlag (13) und einem zweiten Anschlag (14) eingespannt ist, wobei der erste Anschlag (13) integral mit der Trägerhülse (12) ausgebildet oder fest mit der Trägerhülse (12) verbunden ist, insbesondere durch Schweißen, Aufpressen oder Verschrauben.

11. Rotor nach Anspruch 10,
**dadurch gekennzeichnet, dass**
der zweite Anschlag (14) als Druckplatte (14a) ausgebildet ist, die fest mit der Trägerhülse (12) verbunden ist, insbesondere durch Schweißen, Aufpressen oder Verschrauben.

12. Rotor nach einem der vorhergehenden Ansprüche,
**dadurch gekennzeichnet, dass**
der Ringspalt (23) mit Fluidkanälen in der Rotorbaugruppe (10) fluidverbunden ist.

## Claims

1. Method for producing a rotor for an electric motor, said method comprising the following steps:
a) pre-assembling a rotor module (10) comprising at least one carrier sleeve (12) and a laminated core (11) assembled on the carrier sleeve (12);
b) roller-burnishing a rotor shaft (20) at least in portions so as to form at least two roller-burnished shaft portions (21) of the rotor shaft (20); and
c) press-fitting the rotor module (10) onto the at least one roller-burnished shaft portion (21) of the rotor shaft (20); and
d) the rotor shaft (20) has at least one shaft portion (22) which is not roller-burnished and is disposed axially between two roller-burnished shaft portions (21) and, conjointly with the carrier sleeve (12), delimits an annular gap (23); wherein
e) the annular gap (23) by a sealing means is sealed in relation to the roller-burnished shaft portions (21).

2. Method according to Claim 1,
**characterized in that**,
in step c), the carrier sleeve (12) is press-fitted onto the roller-burnished shaft portion (21) of the rotor shaft (20).

3. Method according to Claim 1 or 2,
**characterized in that**
the at least one laminated core (11) is fixed on the carrier sleeve (12) by an axial interference fit assembly.

4. Method according to one of the preceding claims, **characterized in that**
the at least one laminated core (11) on the carrier sleeve (12) is clamped axially between a first detent (13) and a second detent (14), wherein the first detent (13) is configured so as to be integral to the carrier sleeve (12) or is fixedly connected to the carrier sleeve (12), in particular by welding, press-fitting or screw-fitting.

5. Method according to Claim 4,
**characterized in that**
the second detent (14) is configured as a thrust plate (14a) which is fixedly connected to the carrier sleeve (12), in particular by welding, press-fitting or screw-fitting.

6. Method according to one of the preceding claims, **characterized in that**
the carrier sleeve (12) and/or the thrust plate (13a) are/is provided with a profiled internal contour (27a) in such a manner that an interference fit assembly created by axially press-fitting the carrier sleeve (12) to the rotor shaft (20) and/or by axially press-fitting the thrust plate (14a) onto the carrier sleeve (12) is supplemented by a form-fitting connection component.

7. Method according to Claim 1,
**characterized in that**
the annular gap (23) is fluidically connected to fluid ducts in the rotor module (10).

8. Rotor for an electric motor, having a rotor shaft (20) and a rotor module (10) which has a carrier sleeve (12) and at least one laminated core (11) assembled on the carrier sleeve (12), wherein the rotor shaft (20) has at least two roller-burnished shaft portions (21) onto which the rotor module (10) is press-fitted, wherein the rotor shaft (20) has at least one shaft portion (22) which is not roller-burnished and is disposed axially between two roller-burnished shaft portions (21) and, conjointly with the carrier sleeve (12), delimits an annular gap (23), wherein the annular gap (23) by a sealing means is sealed in relation to the roller-burnished shaft portions (21).

9. Rotor according to Claim 8,
**characterized in that**
the at least one laminated core (11) is fixed on the carrier sleeve (12) by an axial interference fit assembly.

10. Rotor according to Claim 8 or 9,
**characterized in that**
the at least one laminated core (11) on the carrier sleeve (12) is clamped axially between a first detent (13) and a second detent (14), wherein the first detent (13) is configured so as to be integral to the carrier sleeve (12) or is fixedly connected to the carrier sleeve (12), in particular by welding, press-fitting or screw-fitting.

11. Rotor according to Claim 10,
**characterized in that**
the second detent (14) is configured as a thrust plate (14a) which is fixedly connected to the carrier sleeve (12), in particular by welding, press-fitting or screw-fitting.

12. Rotor according to one of the preceding claims, **characterized in that**
the annular gap (23) is fluidically connected to fluid ducts in the rotor module (10).

## Revendications

1. Procédé de fabrication d'un rotor pour un moteur électrique, comprenant :
a) le pré-assemblage d'un ensemble de rotor (10) comprenant au moins une douille de support (12) et un paquet de tôles (11) monté sur la douille de support (12) ;
b) le roulage au moins par sections d'un arbre de rotor (20) pour former au moins deux sections d'arbre roulées (21) de l'arbre de rotor (20) ; et
c) l'engagement par pression de l'ensemble de rotor (10) sur l'au moins une section d'arbre roulée (21) de l'arbre de rotor (20) et
d) l'arbre de rotor (20) présente au moins une section d'arbre non roulée (22), qui est agencée axialement entre deux sections d'arbre roulées (21) et qui délimite avec la douille de support (12) un interstice annulaire (23),
e) l'interstice annulaire (23) étant étanchéifié par un moyen d'étanchéité par rapport aux sections d'arbre roulées (21).

2. Procédé selon la revendication 1, **caractérisé en ce qu'**à l'étape c), la douille de support (12) est engagée par pression sur la section d'arbre roulée (21) de l'arbre de rotor (20).

3. Procédé selon la revendication 1 ou 2, **caractérisé en ce que** l'au moins un paquet de tôles (11) est fixé sur la douille de support (12) par un assemblage par pression axial.

4. Procédé selon l'une quelconque des revendications précédentes, **caractérisé en ce que** l'au moins un paquet de tôles (11) est serré axialement sur la douille de support (12) entre une première butée (13) et une deuxième butée (14), la première butée (13) étant formée d'un seul tenant avec la douille de support (12) ou étant reliée de manière fixe à la douille de support (12), notamment par soudage, engagement par pression ou vissage.

5. Procédé selon la revendication 4, **caractérisé en ce que** la deuxième butée (14) est configurée sous la forme d'une plaque de pression (14a), qui est reliée de manière fixe à la douille de support (12), notamment par soudage, engagement par pression ou vissage.

6. Procédé selon l'une quelconque des revendications précédentes, **caractérisé en ce que** la douille de support (12) et/ou la plaque de pression (14a) sont pourvues d'un contour intérieur profilé (27a), de telle sorte qu'un assemblage par pression formé par un engagement par pression axial de la douille de support (12) avec l'arbre de rotor (20) et/ou par un engagement par pression axial de la plaque de pression (14a) sur la douille de support (12) est complété par une composante de liaison par complémentarité de forme.

7. Procédé selon la revendication 1, **caractérisé en ce que** l'interstice annulaire (23) est relié fluidiquement à des canaux de fluide dans l'ensemble de rotor (10).

8. Rotor pour un moteur électrique comprenant un arbre de rotor (20) et un ensemble de rotor (10), qui présente une douille de support (12) et au moins un paquet de tôles (11) monté sur la douille de support (12), l'arbre de rotor (20) présentant au moins deux sections d'arbre roulées (21), sur lesquelles l'ensemble de rotor (10) est engagé par pression, l'arbre de rotor (20) présentant au moins une section d'arbre non roulée (22), qui est agencée axialement entre deux sections d'arbre roulées (21) et qui délimite avec la douille de support (12) un interstice annulaire (23), l'interstice annulaire (23) étant étanchéifié par un moyen d'étanchéité par rapport aux sections d'arbre roulées (21).

9. Rotor selon la revendication 8, **caractérisé en ce que** l'au moins un paquet de tôles (11) est fixé sur la douille de support (12) par un assemblage par pression axial.

10. Rotor selon la revendication 8 ou 9, **caractérisé en ce que** l'au moins un paquet de tôles (11) est serré axialement sur la douille de support (12) entre une première butée (13) et une deuxième butée (14), la première butée (13) étant formée d'un seul tenant avec la douille de support (12) ou étant reliée de manière fixe à la douille de support (12), notamment par soudage, engagement par pression ou vissage.

11. Rotor selon la revendication 10, **caractérisé en ce que** la deuxième butée (14) est configurée sous la forme d'une plaque de pression (14a), qui est reliée de manière fixe à la douille de support (12), notamment par soudage, engagement par pression ou vissage.

12. Rotor selon l'une quelconque des revendications précédentes, **caractérisé en ce que** l'interstice annulaire (23) est relié fluidiquement à des canaux de fluide dans l'ensemble de rotor (10).
